# EUROPÄISCHE PATENTSCHRIFT

(11) **EP 0 956 217 B1**
(45) Veröffentlichungstag und Bekanntmachung des Hinweises auf die Patenterteilung: **31.10.2001**
(21) Anmeldenummer: 98907856.3
(22) Anmeldetag: 24.01.1998
(51) Int. Cl.: B60Q 1/48

(54) **VERFAHREN ZUR DATENÜBERTRAGUNG IN EINEM FAHRZEUG**
METHOD FOR DATA TRANSMISSION IN A VEHICLE
PROCEDE POUR LA TRANSMISSION DE DONNEES DANS UN VEHICULE

(30) Priorität: 29.01.1997 DE 19703144
(43) Veröffentlichungstag der Anmeldung: 17.11.1999
(73) Patentinhaber: ROBERT BOSCH GMBH, 70442 Stuttgart (DE)
(72) Erfinder: HÖTZEL, Jürgen, D-64720 Michelstadt (DE); TSCHISKALE, Ega, D-78333 Hoppetenzell (DE)
(86) Internationale Anmeldenummer: DE9800216
(87) Internationale Veröffentlichungsnummer: WO9833677

(56) Entgegenhaltungen:
- EP-A- 0 546 370
- DE-A- 19 631 694
- US-A- 4 404 541
- US-A- 4 937 796
- US-A- 5 455 557

## Beschreibung

### Stand der Technik

Die Erfindung geht aus von einem Verfahren zur Datenübertragung in einem Fahrzeug nach der Gattung des Hauptanspruchs.

Für Rückfahrhilfen werden in einem Fahrzeug Steuergeräte eingesetzt, die die Daten von Sensoren auswerten und an eine Anzeige weitergeben. Für die Datenübertragung von dem Steuergerät an die Anzeige, die für den Fahrer an einer zugänglichen Stelle plaziert sein muß, werden von der sonstigen Elektrik getrennte Kabel in das Fahrzeug eingezogen. Das bedeutet bei der Herstellung eines - Fahrzeuges einen Mehraufwand an Kosten und Arbeitszeit. Auch für den Fall, daß eine Rückfahrhilfe in einem Fahrzeug nachgerüstet werden soll, ist die Kabelverlegung das eigentliche Problem, wie aus dem Artikel "Pilotprojekt", Gute Fahrt 10/91, S.50-53 bekannt ist. Besonders groß ist der Aufwand, wenn ein Zugfahrzeug mit Anhänger oder Sattelauflieger mit Rückfahrhilfen versehen werden soll. Gerade die Ankupplung des Hängers und seine elektrische Verbindung über ein Spezialkabel, z. B. einem Spiralkabel mit wasserdichten Stecker erhöhen den Aufwand. Aus der nachveröffentlichten DE 196 31 694 A1 ist es bekannt, Signale einer Auswerteschaltung bzw. Abstandssignale auf einen HF-Träger zu geben und mittels eines Demodulators in der Fahrerkabine die über die Gleichspannungsversorgungsleitung übertragenen Signale demoduliert einer Anzeigevorrichtung zuzuführen.

### Vorteile der Erfindung

Das erfindungsgemäße Verfahren zur Datenübertragung mit den kennzeichnenden Merkmalen des Hauptanspruchs hat demgegenüber den Vorteil, auf vorhandene Kabelwege im Fahrzeug zurückzugreifen. Vor allem bei einer eventuellen Nachrüstung eines Fahrzeugs mit einer Rückfahrhilfe ist es sehr viel einfacher, die bereits vorhandenen Kabelwege als Datenleitungen und elektrische Versorgungsleitungen für die Steuergeräte zu benutzen.

Durch die in den Unteransprüchen aufgeführten Maßnahmen ist eine vorteilhafte Weiterbildung und Verbesserung des im Hauptanspruch angegebenen Datenübertragungsverfahrens möglich.

Die einfachste Möglichkeit einer Datenübertragung erfolgt über die elektrische Versorgungsleitung, an die auch die Steuergeräte angeschlossen sind. Besonders vorteilhaft ist es dabei, wenn als elektrische Versorgungsleitung für das Steuergerät die Leitungen für Verbraucher, wie z.B. die Rückfahrscheinwerfer benutzt werden. Das hat den Vorteil, daß das Steuergerät nur im Falle einer Rückwärtsbewegung des Fahrzeugs mit Spannung versorgt wird. Zur An- und Ausschaltung des Steuergeräts dient dann der bereits im Fahrzeug vorhandene Schalter für den Rückwärtsgang.

Die Datenübertragung kann auch über eine weitere elektrische Versorgungsleitung erfolgen, die die Steuergeräte nicht selbst mit Strom versorgt.

In einer weiteren Ausbildung wird als Datenübertragungsleitung eine elektrische Versorgungsleitung, z.B die Zweitdrahtleitung. eines Blinkers gewählt. Vorteilhafterweise wird für die Datenübertragung über eine Zweitdrahtleitung ebenfalls die Versorgungsleitung des Rückfahrscheinwerfers gewählt. Für die Datenübertragung über die Blinkerleitung müssen die Verbraucher, also die Blinker, nicht in Betrieb sein. Eine weitere vorteilhafte Ausführungsform überträgt die Daten symmetrisch über beide vorhandenen Blinkerleitungen.

Für einen Einsatz in einem Fahrzeug, das aus einem Zugfahrzeug und einem Anhänger besteht, ist es von Vorteil, daß nur ein erstes Steuergerät berechtigt ist, Daten weiterzugeben. Die weiteren, angeschlossenen Steuergeräte unterbrechen ihre Datenübertragung, wenn sie ein weiteres Steuergerät detektieren.

Eine vorteilhafte Überprüfung des zweiten Steuergerät, ob ein erstes Steuergerät angeschlossen ist, erfolgt z. B. durch Lauschen auf die Signale des ersten Geräts im Datenstrom. Die zweiten Steuergeräte sind dazu mit einer Zeitverzögerung versehen. In dieser Verzögerungszeit lauschen sie auf Daten, die das erste Steuergerät sofort sendet.

Es ist weiterhin möglich, durch Messung des Stroms des elektrischen Verbrauchers ein erstes Steuergerät zu detektieren.

Als Modulations- und Codierungsverfahren kommen alle bekannten Techniken für die Übertragung zum Einsatz, vorzugsweise wird allerdings das Frequency Shift Keying eingesetzt

### Zeichnungen

Ausführungsbeispiele der Erfindung sind in den Zeichnungen dargestellt und in der nachfolgenden Beschreibung näher erläutert. Figur 1 zeigt ein Ausführungsbeispiel, bei dem die Daten über die Versorgungsleitung des Steuergerätes geführt werden. Figur 2 zeigt eine Ausführungsform, bei der noch ein Anhänger mit einem zweiten Steuergerät impliziert ist. Figur 3 zeigt eine Lösung mit einer Datenübertragung über die Blinkerleitungen, Figur 4 eine Lösung mit Anhängerbetrieb und Figur 5 eine symmetrische Datenübertragung.

### Beschreibung der Ausführungsbeispiele

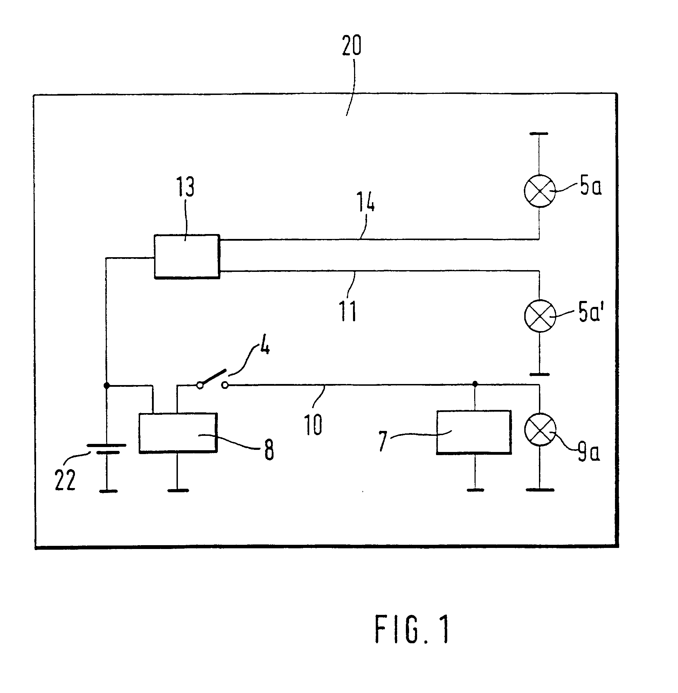

Figur 1 zeigt ein Fahrzeug 20, das mit einer Rückfahrhilfe ausgestattet ist. Das Steuergerät 7 der Rückfahrhilfe befindet sich am Heck des Fahrzeugs 20 und ist mit Sensoren, die hier nicht eingezeichnet sind, verbunden, die die Entfernung zu einem Hindernis aufnehmen. Das Steuergerät 7 ist mit der elektrischen Versorgungsleitung 10 für den Rückfahrscheinwerfer 9a verbunden. In der Leitung 10 befindet sich der Schalter 4, der im Fall einer Rückwärtsbewegung des Fahrzeuges den Kontakt zu der Stromversorgungseinheit 22, im allgemeinen der Batterie, herstellt. Die Versorgungsleitung 10 ist auch mit der Anzeige 8 für die Rückfahrhilfe verbunden. Mit der Batterie 22 sind weitere Versorgungsleitungen 11 und 14 über das Blinkerrelais 13 verbunden. Sie versorgen die Blinker 5a und 5a' mit Strom.

Setzt das Fahrzeug 20 zurück, wird auch der Schalter 4 für die Rückfahrleuchte 9a geschlossen. Das Steuergerät 7 sowie die Anzeige 8 werden dann mit Spannung der Batterie 22 versorgt. Die dem Steuergerät von den nicht dargestellten Sensoren zugehenden Signale werden im Steuergerät ausgewertet und müssen an die Anzeige 8 übermittelt werden. Die Daten werden über die elektrische Versorgungsleitung 10, eine Zweidrahtversorgungsleitung seriell an die Anzeige 8 weitergeleitet.

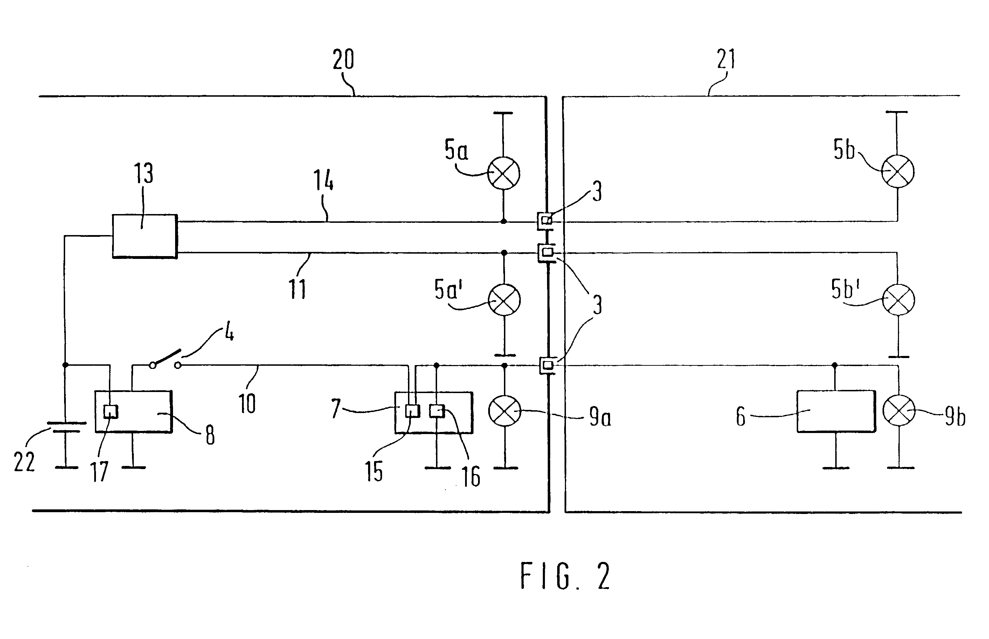

Figur 2 zeigt schematisch die Schaltung in einem Fahrzeug 20 sowie einem Anhänger 21. Die einzelnen Komponenten sind bereits in Fig. 1 beschrieben. Die Ankopplung des Zugfahrzeugs an den Anhänger 21 erfolgt über Steckverbindungen 3. Zusätzlich zu dem im Zugfahrzeug 20 vorhandenen Steuergerät 7 befindet sich in der Fortsetzung der Versorgungsleitung 10 das Steuergerät 6 des Anhängers 21. Die elektrische Versorgungsleitung 10 versorgt sowohl die Rückfahrleuchte 9a des Zugfahrzeugs 20 als auch die Rückfahrleuchte 9b des Anhängers 21 mit Spannung. Innerhalb der Anzeige 8 ist ein Detektor 17 für eine Strommessung installiert. Innerhalb des Steuergerätes 7 befinden sich Detektoren 15 für eine Strommessung, oder für eine Modulationsmessung 16.

Fährt das Fahrzeug rückwärts, wird der Schalter 4 für die Rückfahrleuchten geschlossen. Damit sind beide Rückfahrleuchten 9a und 9b in Betrieb. Beide Steuergeräte, das Steuergerät 7 im Zugfahrzeug 20, als auch das Steuergerät 6 im Anhänger 21 werten Daten, die von externen, nicht eingezeichneten Sensoren geliefert werden aus. Zunächst übertragen alle in der Versorgungsleitung 10 befindliche Steuergeräte ihre Daten an die Anzeige 8. Alle Daten, die die Steuergeräte über die Versorgungsleitung übertragen, werden mit Hilfe von Strom- oder Spannungsmodulation auf die Versorgungsleitung aufgeprägt. Als Modulationsverfahren und Codierungsverfahren kommen alle bekannten Techniken in Betracht, wobei die Übertragungseigenschaften der Leitungen berücksichtigt werden müssen. Es muß allerdings ein Übertragungsverfahren verwendet werden, das den gültigen EMV-Vorschriften entspricht. Ein Frequency Shift Keying (FSK)-Verfahren ist von Vorteil, da es nur kleine EMV-Störungen im Frequenzbereich bis 10 kHz verursacht. Besonders vorteilhaft ist es, ein gepulstes FSK-Verfahren zu verwenden, da dadurch bei sicherer Übertragung die Strombelastung minimal und die Funktionsbeeinflussung der Verbraucher nicht mehr meßbar ist. Zudem ist das Frequenzspektrum der aktiven EMV auf ein schmales Band beschränkt. In Figur 2 werden Daten der Steuergeräte 7 und 6 über die Versorgungsleitung 10 übertragen. Sobald mehr als ein Steuergerät sich in einem Fahrzeug befindet, muß verhindert werden, daß die Steuergeräte gleichzeitig Daten an die Anzeige übermitteln und so zu einer Konfusion beitragen. Die Kommunikation zwischen Steuergeräten und Anzeige ist zunächst als Einwegkommunikation zwischen einem Steuergerät und einer Anzeige verwirklicht. Sobald das Fahrzeug 20 einen Anhänger 21 aufweist, müssen Maßnahmen getroffen werden, um zu verhindern, daß beide Steuergeräte gleichzeitig Daten über die Versorgungsleitung 10 übermitteln. Dazu muß im einfachsten Fall eine Rangordnung der beiden Steuergeräte vorgegeben werden. Das Steuergerät 7 ist im einfachsten Fall werksseitig als Steuergerät eines Zugfahrzeugs, das Steuergerät 6 als Steuergerät eines Anhängers definiert. Ist nur das Steuergerät 7 im Zugfahrzeug vorhanden, beginnt das Steuergerät, Signale seiner Sensoren aufzunehmen, sobald die Versorgungsleitung 10 über den Schalter 4 geschlossen wird. Da es sich um das Steuergerät des Zugfahrzeugs handelt, besitzt es eine interne Zeitverzögerungsschaltung, die verhindert, daß die aufgenommenen Daten sofort über die Leitung 10 an die Anzeige weitergegeben werden und die Daten zwischenspeichert. Nach Ablauf der internen Zeitverzögerung werden die im Steuergerät 7 zwischengespeicherten Daten an die Anzeige übertragen. Wird an das Zugfahrzeug 20 ein Anhänger 21 angekoppelt, weiß das Steuergerät 7 zunächst nichts vom Vorhandensein des Steuergerätes 6. Das Steuergerät 6 ist so ausgelegt, daß es keine Zeitverzögerung für die Übertragung von Daten der Sensoren an die Anzeige enthält. Sobald das Fahrzeug mit Hänger zurücksetzt und der Schalter für die Rückfahrleuchten 9a und 9b geschlossen wird beginnt das Steuergerät Daten seiner Sensoren zu sammeln und über die Leitung 10 an die Anzeige zu übertragen. Das Steuergerät 7 hat eine Zeitverzögerung und sammelt in der Zwischenzeit Daten seiner Sensoren. Gleichzeitig lauscht das Steuergerät 7 mit Hilfe eines Detektors 16 auf Signale, die der Versorgungsleitung 10 aufgeprägt sind. Da das Steuergerät im Anhänger 6 sofort mit der Übertragung von Daten beginnt, werden diese Daten vom Steuergerät 7 auf der Leitung 10 erkannt. Das Steuergerät 7 wird sofort stummgeschaltet und geht in eine Überprüfungsfunktion, die nur die Datenübertragung auf der Versorgungsleitung 10 überwacht. Wird der Anhänger 21 abgekoppelt kommen vom Steuergerät 6 keine Signale mehr. Setzt das Fahrzeug jetzt zurück, sammelt das Steuergerät 7 wieder Daten seiner Sensoren speichert sie in der Zeitverzögerungszeit zwischen und sendet sie, da keine Daten auf der Versorgungsleitung 10 zu detektieren sind an die Anzeige 8 weiter. Die Zuordnung, welches Steuergerät in einem Fahrzeug an welcher Position ist, muß nicht über die Hardwarekonfiguration erfolgen. Es sind auch Lösungen mit einer Pinkodierung der Anschlüsse der Steuergeräte denkbar, so daß die Geräte über ihren Anschluß erkennen, an welcher Position sie im Fahrzeug eingesetzt sind.

Die Detektion des Steuergerätes 6 kann auch über ein anderes Verfahren erfolgen. Dazu wird im Steuergerät 7 eine Strommessung 15 vorgenommen. Die Messung erfolgt an der gemeinsamen Versorgungsleitung 10 für die Steuergeräte. Die Strommessung, die den zusätzlichen Verbrauch des Steuergerätes 6 detektiert, kann auch über einen Meßfühler 17, der sich entweder in der Anzeige oder an einem der Verbraucher, z.B. den Blinkern 9a und 9b, befinden kann gemessen.

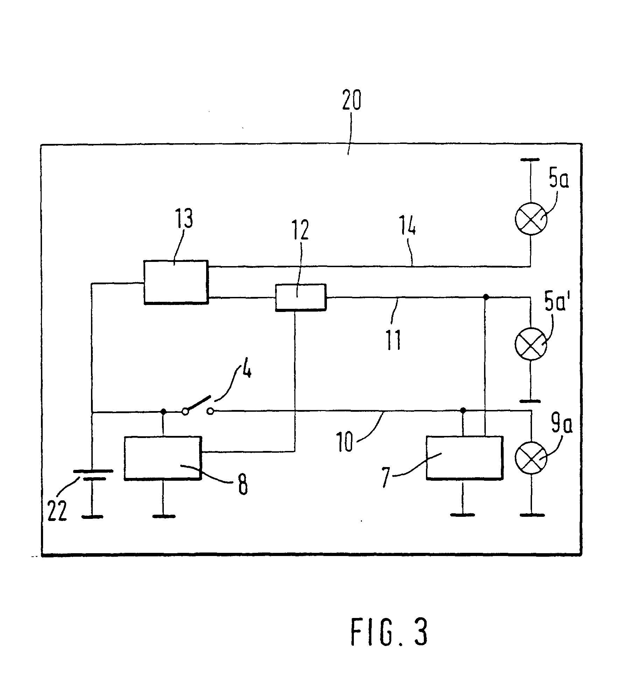

Figur 3 zeigt die Schaltung in einem Zugfahrzeug 20 bei einem alternativen Übertragungsverfahren. Die einzelnen Komponenten entsprechen den bereits in Figur 1 beschriebenen Bauelementen. Das Steuergerät 7, das über die elektrische Versorgungsleitung 10 mit Spannung versorgt wird, wird beim Schließen des Schalters 4, d.h. beim Zurücksetzen des Fahrzeuges, mit Spannung versorgt. Die Signale von den Sensoren des Rückfahrsteuergerätes werden vom Steuergerät 7 auf die Versorgungsleitung 11 des rechten Blinkers 5a' gegeben. Vor dem Blinkerrelais 13 greift der Signalwandler 12 das Signal auf der Versorgungsleitung 11 ab, und gibt das Signal an die Anzeige 8 weiter. Die Daten werden über die elektrische Versorgungsleitung 11 auch dann weitergegeben, wenn die elektrischen Verbraucher 5a und 5a', die Blinker, nicht in Betrieb sind, da das Blinkerrelais 13 nicht innerhalb der Übertragungsstrecke liegt.

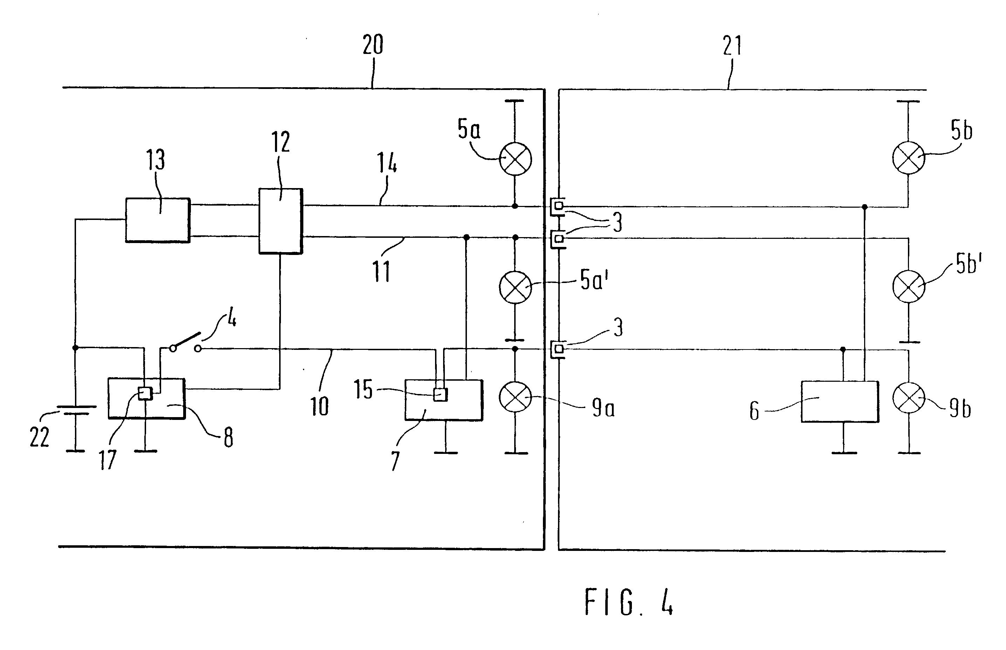

Figur 4 stellt die Schaltung bei einem Betrieb mit einem Anhänger dar. Die Komponenten der Schaltung sind bereits in Fig.2 ausführlich beschriebn. In diesem Ausführungsbeispiel werden die Daten des Steuergeräts 6, das sich im Anhänger 21 befindet, über die Versorgungsleitung 14 des Blinkers 5b weitergegeben, während die Daten des Steuergeräts 7 im Zugfahrzeug über die Versorgungsleitung 11 des Blinkers 5a' übertragen werden. In diesem Ausführungsbeispiel ist es nicht notwendig, daß die Steuergeräte 6 und 7 voneinander wissen. Beide Steuergeräte können über die getrennten Versorgungsleitungen 11 und 14 Daten übertragen. Der Signalwandler 12 detektiert die Signale, und gibt nur die Daten des Steuergeräts 6, die über die Versorgungsleitung 14 kommen, an die Anzeige weiter.

Alternativ dazu detektieren entweder das Steuergerät 7 über den Meßfühler 15 oder die Anzeige 8 über den Meßfühler 17 den Stromverbrauch auf der Leitung 10, so daß das Steuergerät 7 stummgeschaltet wird, wenn der Stomverbrauch des Steuergerätes 6 detektiert wird.

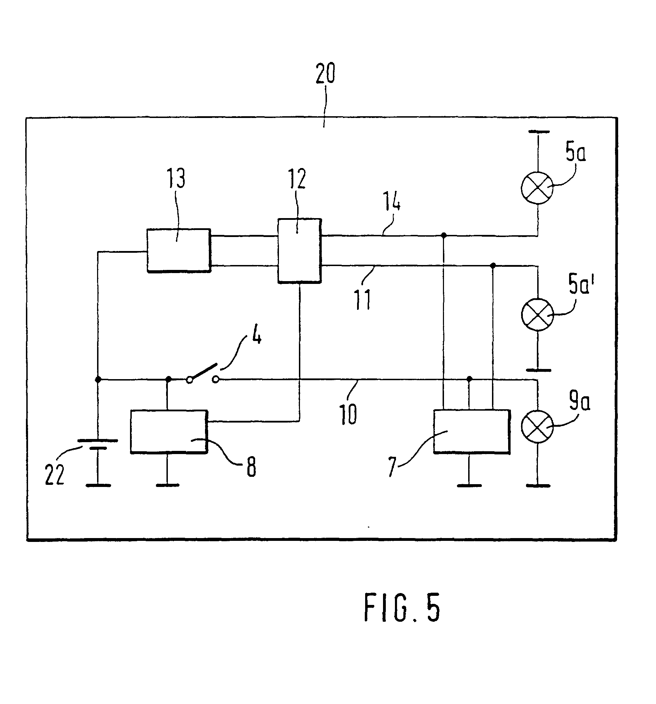

Figur 5 zeigt ein Ausführungsbeispiel mit symmetrischer Datenübertragung. Die Bezugszeichen werden wieder analog zu Figur 1 verwendet. Die Daten der Rückfahrsensoren wird vom Steuergerät 7 aufgenommen und über die Leitungen 11 und 14 symmetrisch übertragen. Der Signalwandler 12 nimmt die Daten auf und gibt sie an die Anzeige 8 weiter.

Die bisher beschriebenen Ausführungsbeispiele beschreiben einfache Einwege-Kommunikation zwischen einem Steuergerät und einer Anzeige. Es ist zur Realisierung der Erfindung auch eine Vollweg-Kommunikation denkbar, wobei Daten zwischen allen Komponenten ausgetauscht werden. Voraussetzung für die Vollwegekommunikation ist die Tatsache, daß die jeweiligen Steuergeräte ihre Position in Zugmaschine oder Anhänger kennen müssen. Die Definition der Position kann durch Einbau spezifizierter Geräte erfolgen, oder durch Einbau an einem Codierungsstecker. Es ist auch möglich eine Initialisierungsphase zu starten, bei der die Steuergeräte eine definierte Hindernisanordnung vorfinden, an der sie selbst erkennen, an welcher Position sie sich befinden. Eine einfache Möglichkeit der Vollwegekommunikation ist, daß die Anzeigeeinheit 8 das jeweilige Steuergerät 7 oder 6 aktiviert und erst nach dem Aufruf durch die Anzeige 8 das entsprechende Steuergerät mit dem Senden von Daten beginnt. In diesem Fall würde die Anzeige zuerst das Steuergerät des Anhängers 6 aufrufen. Ist dies vorhanden, beginnt es seinerseits mit der Übertragung der Information. Antwortet es nicht, so ruft die Anzeigeeinheit kurz darauf das Steuergerät der Zugmaschine auf, welches erst jetzt aktiv wird. Voraussetzung für diese Art der Kommunikation ist, daß alle Einheiten sowohl senden als auch empfangen können. Die Steuergeräte können identisch sein, der Unterschied zwischen ihnen besteht in einer geeigneten Software. Die Steuergeräte haben aus der Initialisierungsphase gelernt, an welcher Position sie sich befinden und damit auch, auf welchen Code bei Anfragen durch die Anzeige sie reagieren müssen. Die Vollwegekommunikation bietet die Möglichkeit, ein Diagnosegerät anzuschließen, um eine schnelle Fehleranalyse durchzuführen.

## Patentansprüche

1. Verfahren zur Datenübertragung von mehreren Steuergeräten (7) in einem Fahrzeug, die Daten für eine Rückfahrhilfe aufnehmen und auswerten, wobei Daten über eine Leitung zu einer Anzeigeeinheit (8) im Fahrzeug übertragen werden, wobei die Steuergeräte (7) über eine elektrische Versorgungsleitung (10) eines weiteren, im Fahrzeug vorhandenen elektrischen Verbrauchers (9) mit Strom versorgt werden, wobei die anzuzeigenden Daten über elektrische Versorgungsleitungen (10, 11, 14) übertragen werden, **dadurch gekennzeichnet, daß** eine Rangordnung der Steuergeräte für die Übermittlung von Daten über die Versorgungsleitung vorgegeben wird.

2. Verfahren zur Datenübertragung nach Anspruch 1, **dadurch gekennzeichnet, daß** die Daten über die elektrische Versorgungsleitung (10) des Verbrauchers (9), die die Steuergeräte (7) mit Strom versorgt, übertragen werden.

3. Verfahren zur Datenübertragung nach Anspruch 1, **dadurch gekennzeichnet, daß** für die Datenübertragung die elektrische Versorgungsleitung (11) eines ersten Verbrauchers (5) und für die Stromversorgung der Steuergeräte die elektrische Versorgungsleitung (10) eines zweiten Verbrauchers (9) benutzt wird.

4. Verfahren zur Datenübertragung nach Anspruch 1, **dadurch gekennzeichnet, daß** die Daten der mehreren Steuergeräte (7) jeweils getrennt über unterschiedliche elektrische Versorgungsleitung übertragen werden.

5. Verfahren zur Datenübertragung nach den Ansprüchen 1 bis 4, **dadurch gekennzeichnet, daß** ein erstes Steuergerät (6), das sich am Ende der Versorgungsleitung befindet, konfiguriert wird, nach der Initialisierung mit der Datenübertragung zu beginnen, während ein zweites Steuergerät (7) konfiguriert wird, nach einer Verzögerungszeit mit der Datenübertragung zu beginnen, wenn das zweite Steuergerät (6) vom ersten Steuergerät nicht detektiert wird.

6. Verfahren zur Datenübertragung nach den Ansprüchen 1 bis 5, **dadurch gekennzeichnet, daß** das zweite Steuergerät (7) innerhalb der Verzögerungszeit über eine Detektion (16) Daten auf mindestens einer Versorgungsleitung detektiert und nach Detektion von Daten des ersten Steuergeräts stummgeschaltet wird.

7. Verfahren zur Datenübertragung nach den Ansprüchen 1 bis 6, **dadurch gekennzeichnet, daß** das zweite Steuergerät innerhalb der Verzögerungszeit einen zusätzlichen Stromverbrauch (15) auf der Versorgungsleitung detektiert und nach Detektion von zusätzlichen Stromverbrauchs des ersten Steuergeräts stummgeschaltet wird.

8. Verfahren zur Datenübertragung nach den Ansprüchen 1 bis 7, **dadurch gekennzeichnet, daß** als Modulationsverfahren für die Datenübertragung vorzugsweise das Frequency Shift Keying-Verfahren angewendet wird.

## Claims

1. Method for transmitting data from a plurality of control units (7) in a vehicle which record and evaluate data for a reversing aid, data being transmitted via a line to a display unit (8) in the vehicle, the control units (7) being supplied with power via an electrical supply line (10) of a further electrical load (9) in the vehicle, the data which is to be displayed being transmitted via electrical supply lines (10, 11, 14), **characterized in that** the ranking of the control units is predefined for the transmission of data via the supply line.

2. Method for transmitting data according to Claim 1, **characterized in that** the data is transmitted via the electrical supply line (10), supplying the control units (7) with power, of the load (9).

3. Method for transmitting data according to Claim 1, **characterized in that** the electrical supply line (11) of a first load (5) is used for transmitting data, and the electrical supply line (10) of a second load (9) is used for supplying power to the control units.

4. Method for transmitting data according to Claim 1, **characterized in that** the data of the plurality of control units (7) is transmitted in each case separately via different electrical supply lines.

5. Method for transmitting data according to Claims 1 to 4, **characterized in that** a first control unit (6) which is located at the end of the supply line is configured to begin transmitting data after the initialization, while a second control unit (7) is configured to begin transmitting data after a delay time if the second control unit (6) is not detected by the first control unit.

6. Method for transmitting data according to Claims 1 to 5, **characterized in that** the second control unit (7) detects data on at least one supply line within the delay time by means of a detection operation (16), and is switched to a mute setting after the detection of data of the first control unit.

7. Method for transmitting data according to Claims 1 to 6, **characterized in that** the second control unit detects an additional consumption (15) of power on the supply line within the delay time and is switched to a mute setting after the detection of additional instances of consumption of power of the first control unit.

8. Method for transmitting data according to Claims 1 to 7, **characterized in that** the frequency switch keying method is preferably applied as the modulation for transmitting data.

## Revendications

1. Procédé de transmission de données de plusieurs appareils de commande (7) d'un véhicule, qui reçoivent et exploitent les données pour assister une manoeuvre de marche arrière,
les données étant transmises vers une unité d'affichage (8) dans le véhicule, par l'intermédiaire d'une ligne,
les appareils de commande (7) étant alimentés en courant par une ligne d'alimentation électrique (10) d'un autre consommateur électrique (9) équipant le véhicule,
les données à afficher étant transmises par des lignes d'alimentation électriques (10, 11, 14),
**caractérisé en ce que**
les appareils de commande sont classés dans un ordre prédéterminé pour la transmission des données par la ligne d'alimentation.

2. Procédé de transmission de données selon la revendication 1,
**caractérisé en ce que**
les données sont transmises par la ligne d'alimentation électrique (10) du consommateur (9), ligne qui alimente les appareils de commande (7) en courant électrique.

3. Procédé de transmission de données selon la revendication 1,
**caractérisé en ce que**
pour la transmission des données on utilise la ligne d'alimentation électrique (11) d'un premier consommateur (5), et pour l'alimentation électrique des appareils de commande on utilise la ligne d'alimentation électrique (10) d'un second consommateur (9).

4. Procédé de transmission de données selon la revendication 1,
**caractérisé en ce que**
les données des différents appareils de commande (7) sont transmises chaque fois séparément par une ligne d'alimentation électrique distincte.

5. Procédé de transmission de données selon l'une quelconque des revendications 1 à 4,
**caractérisé en ce qu'**
un premier appareil de commande (6), qui se trouve à l'extrémité de la ligne d'alimentation, est configuré pour qu'après l'initialisation il commence la transmission des données, alors qu'un second appareil de commande (7) est configuré pour qu'il commence la transmission des données après un temps de temporisation, si le second appareil de commande (6) n'est pas détecté par le premier appareil de commande.

6. Procédé de transmission de données selon l'une quelconque des revendications 1 à 5,
**caractérisé en ce que**
le second appareil de commande (7) est détecté pendant la durée de temporisation par une détection (16) des données sur au moins une ligne d'alimentation et, après détection des données du premier appareil de commande, il est commuté pour ne pas émettre.

7. Procédé de transmission de données selon l'une quelconque des revendications 1 à 6,
**caractérisé en ce que**
le second appareil de commande (7) détecte, pendant la durée de tempodsation, une consommation de courant supplémentaire (15) sur la ligne d'alimentation et, après détection de la consommation supplémentaire par le premier appareil de commande, il est commuté pour ne pas émettre.

8. Procédé de transmission de données selon l'une quelconque des revendications 1 à 7,
**caractérisé en ce que**
le procédé de modulation pour la transmission des données appliquées est de préférence le procédé de codage par décalage de fréquence.
